Europäisches Patentamt

(19) European Patent Office

Office européen des brevets

(11) Publication number: **0 028 667**
**B1**

## (12) EUROPEAN PATENT SPECIFICATION

(45) Date of publication of patent specification: **28.05.86**

(21) Application number: **79302560.2**

(22) Date of filing: **13.11.79**

(51) Int. Cl.⁴: **C 10 G 49/02,** C 10 G 35/06, B 01 J 37/08, C 10 G 11/02

(54) **High surface area catalysts, their preparation, and hydrocarbon processes using them.**

(43) Date of publication of application:
**20.05.81 Bulletin 81/20**

(45) Publication of the grant of the patent:
**28.05.86 Bulletin 86/22**

(84) Designated Contracting States:
**DE FR GB NL**

(56) References cited:
**FR-A-2 356 715**
**US-A-3 231 488**

(73) Proprietor: **Exxon Research and Engineering Company**
**P.O.Box 390 180 Park Avenue**
**Florham Park New Jersey 07932 (US)**

(72) Inventor: **Aldridge, Clyde Lee**
**6022 South Pollard Parkway**
**Baton Rouge Louisiana (US)**
Inventor: **Bearden Jr., Roby**
**505 Stanford Avenue**
**Baton Rouge Louisiana (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

# 0 028 667

## Description

This invention relates to the preparation of high surface area catalysts and catalyst supports and their use in hydrocarbon treating processes and chemical processes.

Hydrorefining processes utilizing dispersed catalysts in admixture with a hydrocarbonaceous oil are well known. The term "hydrorefining" is intended herein to designate a catalytic treatment, in the presence of hydrogen, of a hydrocarbonaceous oil to upgrade the oil by eliminating or reducing the concentration of contaminants in the oil such as sulfur compounds, nitrogenous compounds, metal contaminants and/or to convert at least a portion of the heavy constituents of the oil such as asphaltenes or coke precursors to lower boiling hydrocarbon products, and to reduce the Conradson carbon residue of the oil.

U.S. Patent 3,161,585 discloses a hydrorefining process in which a petroleum oil chargestock containing a colloidally dispersed catalyst selected from the group consisting of a metal of Groups VB and VIB, an oxide of said metal and a sulfide of said metal is reacted with hydrogen at hydrorefining conditions. This patent teaches that a concentration of the dispersed catalyst, calculated as the elemental metal, in the oil chargestock is from about 0.1 weight percent to about 10 weight percent of the initial chargestock.

U.S. Patent 3,331,769 discloses a hydrorefining process in which a metal component (Group VB, Group VIB, iron group metal) colloidally dispersed in a hydrocarbonaceous oil is reacted in contact with a fixed bed of a conventional supported hydrodesulfurization catalyst in the hydrorefining zone. The concentration of the dispersed metal component which is used in the hydrorefining stage in combination with the supported catalyst ranges from 250 to 2500 weight parts per million (wppm).

U.S. Patent 3,657,111 discloses a process for hydrorefining an asphaltene-containing hydrocarbon chargestock which comprises dissolving in the chargestock a hydrocarbon-soluble oxovanadate salt and forming a colloidally dispersed catalytic vanadium sulfide in situ within the chargestock by reacting the resulting solution, at hydrorefining conditions, with hydrogen and hydrogen sulfide.

U.S. Patent 3,131,142 discloses a slurry hydrocracking process in which an oil soluble dispersible compound of Groups IV to VIII is added to a heavy oil feed. The catalyst is used in amounts ranging from 0.1 to 1 weight percent, calculated as the metal, based on the oil feed.

U.S. Patent 1,876,270 discloses the use of oil soluble organometallic compounds in thermal cracking or in destructive hydrogenation (hydrocracking) of hydrocarbons to lower boiling products.

U.S. Patent 2,091,831 discloses cracking or destructive hydrogenation carried out in the presence of oil soluble salts of acid organic compounds selected from the group consisting of carboxylic acids and phenols with a metal of Group VI and Group VIII of the Periodic Table. The oil soluble salt is used in amounts between 4 and 20 weight percent based on the feed.

Our patent specification FR—A—2356715 (and corresponding GB—A—1584785) describes a method of preparing a catalyst comprising the steps of:

(a) adding to a hydrocarbon oil chargestock at least one thermally decomposable metal compound, the metal constituent of the said metal compound being selected from the metals of Group II, Group III, Group IV, Group V, Group VIB, Group VIIB, and Group VIII of the Periodic Table of Elements and mixtures of such metals; and

(b) heating said thermally decomposable metal compound within the chargestock at an elevated temperature in the presence of a gas selected from hydrogen-containing gas and a gas containing both hydrogen and hydrogen sulfide. A non-colloidal solid material is formed which can be used as a catalyst for the hydroconversion of heavy hydrocarbon feeds.

The present invention provides a method of preparing a high surface area catalyst, comprising the steps of:

(a) adding to a hydrocarbon oil chargestock at least one thermally decomposable metal compound, the metal constituent of the said metal compound being selected from the metals of Group II, Group III, Group IV, Group V, Group VIB, Group VIIB, and Group VIII of the Periodic Table of Elements and mixtures of such metals;

(b) heating said thermally decomposable metal compound within said chargestock at an elevated temperature in the presence of a gas selected from hydrogen-containing gas, and a gas comprising hydrogen and hydrogen sulfide to produce a solid catalyst within said chargestock, characterized in that the said gas in step (b) is a gas containing hydrogen (known per se) or a gas containing hydrogen and hydrogen sulfide (known per se) or a hydrogen sulfide-containing gas and the hydrogen oil chargestock has a Conradson carbon content of up to 50 weight percent and the amount of said metal compound is such as to provide a ratio of atoms of Conradson carbon atoms of the chargestock to atoms of the metal constituent of the said metal compound of not more than 600 to 1, and comprising the additional step (c) of recovering a solid, high surface area catalyst from the products of step (b).

The present invention provides a method of preparing a high surface area catalyst by adding at least one thermally decomposable metal compound to a hydrocarbon oil chargestock having a Conradson carbon content of up to 50 weight percent, the metal constituent of the said metal compound being selected from the metals of Group II, Group III, Group IV, Group V, Group VIB, Group VIIB and Group VIII of the Periodic Table of Elements and mixtures of such metals, and heating said thermally decomposable metal compound within said chargestock at an elevated temperature in the presence of a gas, characterised in that the amount of said metal compound is such as to provide a ratio of atoms of Conradson carbon

2

# 0 028 667

atoms of the chargestock to atoms of the metal constituent of the said metal compound of not more than 600 to 1 and in that the said gas is selected from a gas comprising hydrogen and/or hydrogen sulfide.

By the expression "ratio of atoms of Conradson carbon atoms of the oil chargestock to atoms of metal constituent" is intended herein the following relationship:

$$\frac{\left\{\dfrac{\text{(weight of Conradson carbon residue)}}{12}\right\}}{\left\{\dfrac{\text{(weight of the metal constituent of the thermally metal compound)}}{\text{(atomic weight of the metal)}}\right\}}$$

The high surface area catalysts of the present invention are preferably made by utilizing a hydrocarbonaceous oil chargestock boiling at atmospheric pressure above about 221°C, preferably above about 260°C, more preferably above about 343°C. These hydrocarbon oils may be derived from any source such as petroleum, oil shale, tar sands and oils derived from coal liquefaction processes. The Conradson carbon residue of these oils will generally range up to about 50 weight percent, preferably below about 30 weight percent (as to Conradson carbon residue, see ASTM test D-189-65).

By way of example, suitable hydrocarbon oil chargestocks for the process of the present invention include virgin gas oil, vacuum gas oil, coker gas oil, visbreaker gas oil, petroleum distillates, white oils, hydrocarbon oils derived from coal liquefaction processes, coal liquefaction bottoms, synthetic polymer oils such as ethylene oligomers, synthetic and natural waxes, etc. Preferably, the oil is a mixture of hydrocarbons boiling at atmospheric pressure, in the range of about 343 to 565°C. More preferably, the hydrocarbon chargestock comprises at least 50 percent of the Conradson carbon in the form of a hydrocarbon stream comprising more than 1 weight percent Conradson carbon residue, such as residual, whole crudes, etc.

To the hydrocarbon oil chargestock is added a thermally decomposable metal compound, wherein the metal constituent is selected from the group consisting of Groups II, III, IV, V, VIB, VIIB, VIII and mixtures thereof of the Periodic Table of Elements. A sufficient amount of a single thermally decomposable metal compound or of a mixture of metal compounds is added to the oil to provide a ratio of atoms of Conradson carbon of the oil chargestock to atom of metal constituent of the thermally decomposable compound or compounds of not more than 600 to 1, more preferably less than 100 to 1. Suitable ranges of ratio of atoms of Conradson carbon of the oil to atom of metal constituent of the thermally decomposable metal compound include an atomic ratio ranging from 2 to 1 to 600 to 1, preferably from 2 to 1 to 300 to 1, more preferably from 4 to 1 to 100 to 1. Thus, the amount of thermally decomposable metal compound added will vary depending on the Conradson carbon of the oil feed actually used so as to provide the ratio required to obtain high surface area catalytic solids.

Suitable thermally decomposable metal compound convertible (under preparation conditions) to solid, non-colloidal catalyst include (1) inorganic metal compounds such as carbonyls, halides, oxyhalides, poly acids such as isopoly acids and heteropolyacids (e.g., phosphomolybdic acid, and molybdosilicic acid); (2) metal salts of organic acids such as acyclic and alicyclic aliphatic carboxylic acids and thiocarboxylic acids containing two or more carbon atoms (e.g., naphthenic acids); aromatic carboxylic acids (toluic acid); sulfonic acids (e.g., toluenesulfonic acid); sulfinic acid; mercaptans; xanthic acids; phenols, di- and polyhydroxy aromatic compounds; (3) organometallic compounds such as metal chelates, e.g., with 1,3-diketones, ethylenediamine, ethylenediaminetetraacetic acid, phthalocyanines, etc.; (4) metal salts of organic amines such as aliphatic amines, aromatic amines and quaternary ammonium compounds.

The metal constituent of the thermally decomposable metal compound, that is convertible to a solid, non-colloidal catalyst, is selected from the group consisting of Groups II, III, IV, V, VIB, VIIB and VIII and mixtures thereof of the Periodic Table of Elements, in accordance with the table published by E. H. Sargent and Co., copyright 1962, Dyna Slide Co., that is, zinc, antimony, bismuth, titanium, cerium, vanadium, niobium, tantalum, chromium, molybdenum, tungsten, manganese, rhenium, iron, cobalt, nickel and the noble metals including platinum, iridium, palladium, osmium, ruthenium and rhodium. The preferred metal constituent of the thermally decomposible compound is selected from the group consisting of molybdenum, tungsten, vanadium, chromium, cobalt, titanium, iron, nickel and mixtures thereof. Preferred compounds of the given metals include the salts of acyclic (straight or branched chain) aliphatic carboxylic acids, salts of alicyclic aliphatic carboxylic acids, heteropolyacids, carbonyls, phenolates and organoamine salts.

When the thermally decomposable metal compound is added to the hydrocarbonaceous chargestock, it first dissolves or disperses in the oil and subsequently, under catalyst preparation conditions herein described, is converted to a solid high surface area catalyst.

The oil chargestock comprising the thermally decomposable metal compound is heated at a temperature ranging from about 199°C to about 571°C, preferably at a temperature ranging from about 260°C to about 482°C, more preferably at a temperature ranging from about 316°C to about 449°C, at a pressure of either from atmospheric or superatmospheric, preferably at superatmospheric pressure in the

3

presence of a gas selected from the group consisting of a hydrogen-containing gas, a hydrogen sulfide-containing gas, and a gas comprising hydrogen and hydrogen sulfide, preferably at least 344.75 kPa gauge (50 psig) of such gas. More preferably, the gas comprises hydrogen and hydrogen sulfide. The hydrogen sulfide may comprise from about 1 to 90 mole percent, more preferably from about 2 to 50 mole percent of the hydrogen-containing gas. Suitable total pressures in the catalyst preparation zone when the heating step is being conducted include a gauge pressure ranging up to about 34.475 MPa (5000 psig), preferably a gauge pressure ranging from 689.5 to 20685 kPa (about 100 to about 3000 psig). Suitable reaction times include from about 5 minutes to about 4 hours, preferably from about 10 minutes to 2 hours. Contact of the solution under catalyst preparation conditions in the reaction zone with the hydrogen sulfide containing gas converts the metal, compound to the corresponding metal catalyst. The oil containing the solids is removed from the catalyst preparation zone. The solids may be separated from the oil by conventional means, for example, by settling or centrifuging or filtration of the slurry. The recovered solids are the high surface area catalysts of the present invention. The surface area of these catalysts will be at least about 50 m$^2$/g and range from about 60 to about 600 m$^2$/g, usually from about 100 to about 500 m$^2$/g. Generally, the high surface area catalyst of the present invention comprise at least 10 weight percent, preferably above about 20 weight percent, more preferably above about 40 weight percent of the metal constituent, calculated as elemental metal, corresponding to the metal constituent of the added thermally decomposable metal compound, said weight being based on the total high surface area catalyst. The catalyst of the present invention may be prepared either in a batch process or in a continuous type operation.

The solids that are recovered from the reaction product of the catalyst preparation zone are suitable as catalysts, catalyst components or catalyst supports for use in a number of chemical processes and hydrocarbon treating processes such as catalytic cracking, hydrogenation, hydrogen refining, hydrodesulfurization, hydrocracking, reforming, etc., especially for hydroprocesses. The term "hydroprocess" is intended herein to mean a process conducted in the presence of hydrogen in which the hydrocarbonaceous oil feed is either upgraded (refined) without substantial change in the boiling range of the oil or a process in which the hydrocarbonaceous oil is converted to lower boiling hydrocarbon products.

The operating conditions to be employed in the hydrocarbon treating processes are well known and will vary with the particular reaction desired. The following table summarizes typical reaction conditions in which the catalysts of the present invention can be utilized.

| Principal reaction desired | Temperature, °C (°F.) | Gauge pressure, kPa (psig) | Hydrogen rate 1 $H_2$/l oil (SCF/bbl) |
|---|---|---|---|
| Hydrorefining | 260—426.7 (500—800) | 344.75—13790 (50—2000) | 89.06—178.1 (500—10,000) |
| Hydrodesulfurization | 315.6—454.4 (600—850) | 3447.5—24132.5 (500—3500) | 53.43—3562.3 (300—20,000) |
| Hydrocracking | 232.2—510 (450—950) | 1379—20685 (200—3000) | 89.06—1781.1 (500—10,000) |
| Catalytic Cracking | 371.1—704.4 (700—1300) | 0—344.75 (0—50) | 0 (0) |
| Catalytic Reforming | 315.6—537.8 (850—1000) | 344.75—6895 (50—1000) | 89.06—1781.1 (500—10,000) |

0 028 667

The feedstocks suitable for the treating process in accordance with the invention include any of the well known feeds conventionally employed in the desired treating processes. Suitable feedstocks for the hydrocarbon treating processes of the present invention include hydrocarbonaceous oils derived from any source such as petroleum, shale, tar sand, coal liquefaction processes. Typically, such feeds include naphthas, gas oils, atmospheric residua, vacuum residua, whole petroleum crude oils, including heavy crude oils, bitumen, etc.

The metal constituent or metal constituents of the solids of the present invention can be varied by using one or more initial thermally decomposable metal compounds which are subsequently thermally decomposed. Alternatively, the recovered solids may be used as support materials for known catalytic metals components. Thus, a recovered solid may be composited in a conventional manner with metal constituents that are known to catalyze a given process. The compositing of the solids with the additional catalytic agents may be performed by impregnating the recovered solids comprising one or more metal constituents with catalytic components or precursors in any conventional way, such as contact of the solids with a dissolved salt of the desired metal or metals or by a method such as disclosed in U.S. Patent 3,959,179.

The compositing of the recovered solids may be performed by depositing a desired catalytic metal component or precursor of a catalytic metal component on the surface of the solids, including contacting of the solids with vapor phase materials. Furthermore, physical mixtures of two or more different recovered solids may be used in certain processes, for example, a catalytic recovered solid having one or more metal constituents which is different from another recovered catalytic solid wherein different initial thermally decomposable metal compounds were used.

The catalyst of the present invention may be used in a moving bed, fixed bed, fluidized bed, ebullating bed, suspension (transferline) or in slurry processes.

The invention is now further described by way of non-limitative examples thereof, and with reference to the accompanying drawings in which:—

Figure 1 is a schematic flow plan of one embodiment of the invention.

Figure 2 is a graph showing the surface areas of a molybdenum-containing catalyst relative to the atomic ratio of Conradson carbon to metal constituent of the catalyst precursors.

Figure 3 is a graph showing the effect of preparation variables on the formation of tungsten containing catalysts.

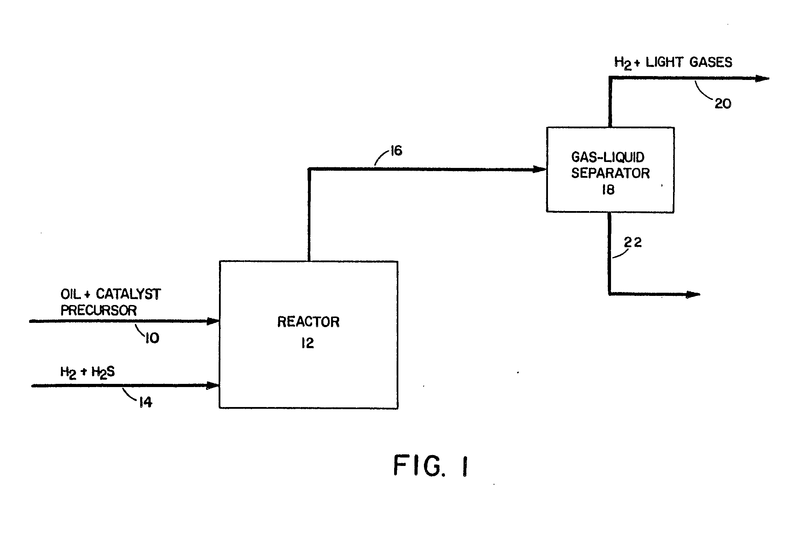

Referring to figure 1, a mixture of a gas oil feed having an atmospheric pressure boiling point of from about 343°C to 565°C and Cold Lake Crude containing an added thermally decomposable metal compound is introduced by line 10 into a catalyst preparation reactor 12 and maintained therein for 10 minutes to 2 hours. The ratio of atoms of Conradson carbon of the oil to atoms of metal constituent of the added thermally decomposable metal compound is between 5 to 1 and 100 to 1. A gaseous mixture comprising hydrogen and from about 2 to 50 mole percent hydrogen sulfide is introduced into reactor 12 by line 14. The catalyst preparation zone in reactor 12 is maintained at a temperature from about 316 to about 449°C and at a gauge pressure ranging from about 689.5 to 20685 kPa (100 to 3000 psig). The reactor effluent is removed by line 16. The effluent comprises an oil, gases and a solid. The solid is the high surface area catalyst of the present invention. The surface area of the recovered catalyst ranges from about 100 to about 400 m²/g.

The effluent is introduced into a gas-liquid separator 18 where hydrogen and light hydrocarbons are removed overhead through line 20. The liquid stream containing dispersed catalyst solids is removed from separator vessel 18 via line 22. The catalytic solids are removed from the liquid stream 22 by conventional means such as centrifuging, settling, etc.

The following examples are presented to illustrate the invention.

Example 1

A high surface area catalyst of the present invention was prepared as follows: a mixture of 17.3 grams of molybdenum naphthenate (6% molybdenum content) from Shepherd Chemical Company and 371.3 grams of light Arabian vacuum gas oil (0.46 wt.% Conradson carbon content) was charged to a 1 litre autoclave under 13790 kPa gauge (2000 psig) of hydrogen pressure at room temperature. The autoclave was heated to 449°C over a period of 93.8 minutes and held at this temperature for 28 minutes and cooled rapidly. The autoclave was vented and the liquid contents containing a solid precipitate was discharged. The solids were isolated by filtration, washed sequentially with toluene and hexane and dried under inert atmosphere. The solids weighed 1.88 grams and gave the analyses listed in Table I. The isolated solids comprise an embodiment of the high surface area catalysts of the present invention.

6

TABLE I

| Composition Element | Analysis*, wt.% | Atomic ratio |
|---|---|---|
| Mo | 47.12 | 1.00 |
| S | 34.98 | 2.22 |
| C | 11.82 | 2.00 |
| H | 1.12 | 2.26 |

| Characteristics | |
|---|---|
| Pore Volume, cm$^3$/g | 2.1 |
| Surface Area, m$^2$/g | 335 |
| Pore Diameter, (Å) m | (240) $240 \times 10^{-10}$ |

* X-ray pattern shows $MoS_2$

Example 2 (Run 345)

A mixture of 90.5 g. of Light Arab vacuum gas oil (Conradson carbon content 0.46 wt.%) and 25.95 g. of molybdenum naphthenate (6.0% molybdenum content, obtained from the Shepherd Chemical Co.) was charged to a 300 cm$^3$ stirred autoclave. The ratio of atoms of Conradson carbon to atoms of molybdenum in this mixture is 2.14. The air was flushed with hydrogen and the autoclave then pressured with 689.5 kPa (absolute) (100 psia) of $H_2S$ and 13790 kPa (absolute) 2000 psia of hydrogen at room temperature. The autoclave was heated at 384.5°C (724°F) for 30 minutes, cooled to room temperature, vented and the autoclave contents filtered to isolate a solid. The solid was washed on the filter paper with 0.8 l of hot toluene and then with 0.5 l of warm hexane to remove all adsorbed heavy hydrocarbons. The washed solid was then dried in an oil pump vacuum oven at 160°C. for 1 hr. The dried solids weighed 2.84 g. and contained 54.8% molybdenum, 7.36% C and 0.82% H. The surface area of this solid was 361 m$^2$/g.

Example 3 (Runs 329, 340, and 344)

Experiments similar to Example 2 were carried out in which various portions of the gas oil were replaced by Cold Lake crude (Conradson carbon 12.8 wt.%) so as to adjust the ratio of atoms of Conradson carbon to molybdenum to 6.5, 34.8, and 300. The surface areas of these solids products were respectively 356 m$^2$/g, 281 m$^2$/g and 153 m$^2$/g. The carbon contents of these solids were 14.03%, 21.50%, and 39.08%, respectively. The molybdenum contents were 48.2%, 42.9%, and 31.6%, respectively.

Example 4 (Experiments 327 and 321)

Experiments similar to Example 3 were done in which no $H_2S$ was added to the autoclave. The Conradson carbon to molybdenum atom ratios were 6.5 and 8.9, and the surface areas obtained were 242 m$^2$/g and 227 m$^2$/g, respectively. The carbon contents of these solids were 16.60% and 16.35%, respectively. The molybdenum contents were 46.6% and 47.0%, respectively.

Example 5

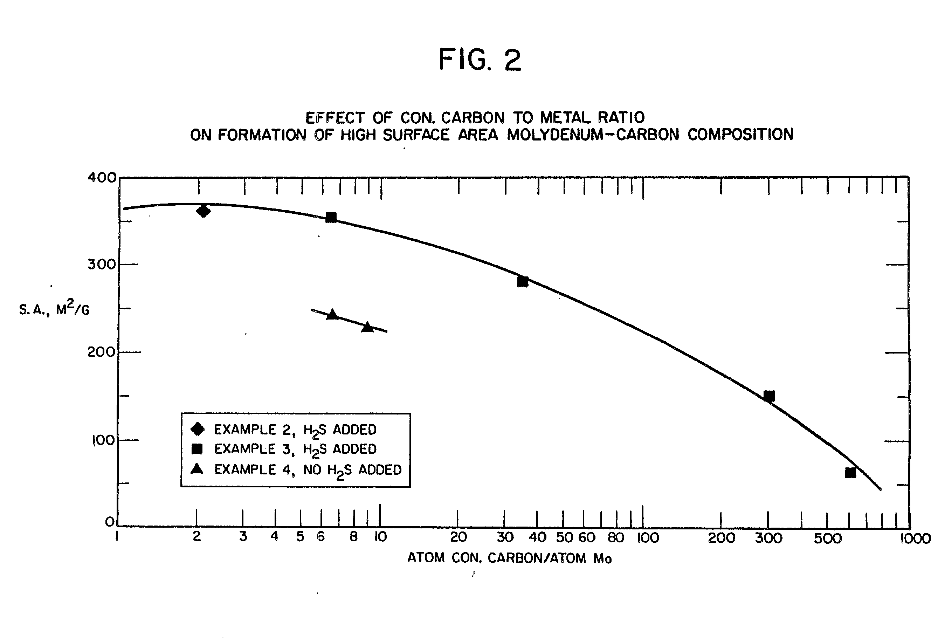

The results of Examples 2, 3 and 4 were plotted in Figure 2 and show that solids with surface areas greater than 50 m$^2$/g are obtained when the Conradson carbon to metal atomic ratio in the feed mixture is not more than 600 to 1. It is also shown that the presence of $H_2S$ enhances the surface area obtained.

Example 6 (Run 445)

A mixture of 88.4 g. of Light Arab vacuum gas oil (Conradson carbon content 0.46 wt.%), 3.1 g. of Cold Lake crude (Conradson carbon content 12.8 wt.%) and 25.95 g. of tungsten resinate (22.2 wt.% tungsten obtained from Engelhard Industries) was charged to a 300 cc stirred autoclave and the air flushed out with hydrogen. In this mixture the Cold Lake crude provided 50% of the Conradson carbon in the system, and the Conradson carbon to tungsten atomic ratio was 2.17. The autoclave was pressured to 689.5 kPa (absolute) (100 psia) with $H_2S$ and 13790 kPa (absolute) (2000 psia) with $H_2$, heated at 385°C (725°F.) for 30 minutes followed by 448.9°C (840°F.) for 30 minutes. After cooling to room temperature, the reactor contents were washed out with toluene and filtered. The solids were washed with 0.8 l hot toluene and with 0.5 l warm hexane and oil pump vacuum oven dried at 160°C. for 1 hr. The dried solids weighted 9.69 g. and had a surface area of 144 m²/g, a carbon content of 9.48%, a hydrogen content of 0.69% and a molybdenum content of 59.7%.

Example 7 (Runs 343, 355, 339, 337, 320, 416 and 417)

Experiments similar to Example 6 were done except that the atomic ratio of Conradson carbon to tungsten was progressively increased by reducing the amount of tungsten resinate charged and increasing the amount of Cold Lake crude charged. Results are tabulated below in Table II.

TABLE II

| | Charge | | | % of Con. Carbon from Cold Lake crude | Con. C to tungsten atomic ratio | Solids properties | | | |
|---|---|---|---|---|---|---|---|---|---|
| Run No. | Gas oil, g. | Cold Lake crude, g. | Tungsten resinate, g. | | | S.A. $m^2/g$ | C, % | H, % | W, % |
| 343 | 81.45 | 9.05 | 25.95 | 76 | 4.2 | 169 | 9.47 | 0.80 | 57.8 |
| 355 | 100.2 | 11.2 | 11.2 | 76 | 11.9 | 203 | 12.10 | 0.70 | 66.4 |
| 339 | 100.2 | 11.1 | 7.0 | 76 | 19 | 200 | 11.87 | 0.82 | 68.5 |
| 337 | 100.2 | 11.1 | 2.80 | 76 | 47.6 | 197 | 13.07 | 0.82 | 62.8 |
| 320 | 100.2 | 11.1 | 1.40 | 76 | 95.2 | 165 | 18.04 | 1.48 | 54.5 |
| 416 | 67.6 | 43.7 | 1.40 | 95 | 300 | 102 | 37.05 | 2.15 | 42.6 |
| 417 | None | 111.3 | 1.40 | 100 | 725 | 21 | 57.3 | 3.07 | 23.7 |

Example 8 (Run 318)

A run was made similar to Example 6 except no Cold Lake crude was added. The charge was 111.3 g. gas oil and 1.40 g. of tungsten resinate. The Conradson carbon to tungsten atomic ratio was 25.2. The gas charged was 689.5 kPa (absolute) (100 psia) $H_2S$ and 13790 kPa (absolute) (2000 psia) $H_2$. The recovered solids weighed 0.45 g. and had a surface area of 66 $m^2$/g with a carbon content of 10.50% and hydrogen content of 1.28%. The tungsten content was 69.1%.

Example 9 (Run 317)

A run was made similar to Example 8 except no $H_2S$ was added to the feed gas. The recovered solid weighed 0.46 g. and had a surface area less than 1 $m^2$/g. The carbon content was 10.15% and hydrogen content was 1.05%. The tungsten content was 67.6%.

Example 10

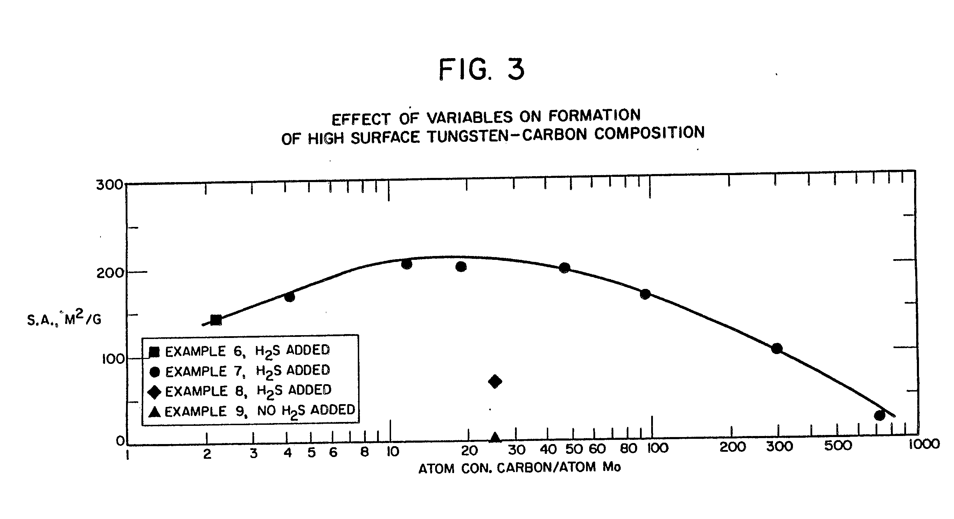

The results of Examples 6, 7, 8 and 9 are plotted in Figure 3 and show the following: (1) higher surface area is obtained when more than 50% of the Conradson carbon is supplied by addition of a hydrocarbon component with greater than 1 Conradson carbon such as a resid or heavy crude, and (2) to obtain a tungsten containing solid with surface area greater than 50 $m^2$/g, the Conradson carbon to tungsten atom ratio should be not more than 600/1.

Example 11 (Runs 375A, 344, 329, 336)

Experiments were done at several temperatures (with sufficient holding at each temperature to insure completion of the reaction) to determine the preferred temperature for preparing the high surface area molybdenum-carbon composition. In each case the charge was 25.95 g. of molybdenum naphthenate, 83.8 g. of Light Arabian vacuum gas oil and 6.70 g. of Cold Lake crude. The Conradson carbon to molybdenum atom ratio for this mixture is 6.5. The gas charged was 689.5 kPa (absolute) (100 psia) $H_2S$ and 13790 kPa (absolute) (2000 psia) $H_2$ at room temperature. Results are tabulated in Table III and show that 385°C (725°F.) is about the optimum temperature.

TABLE III
Effect of temperature

| Run No. | 375A | 342 | 329 | 336 |
|---|---|---|---|---|
| Temperature, (°F.)°C | (390) 198.9 | (600) 315.6 | (725) 385 | (840) 448.9 |
| Time, Min. | 180 | 60 | 30 | 30 |
| Solid Product Yield, g. | 2.90 | 3.66 | 3.23 | 3.39 |
| S.A., $m^2$/g | 50 | 296 | 356 | 330 |
| C, % | 31.98 | 22.60 | 14.03 | 19.50 |
| H, % | 4.22 | 2.30 | 1.90 | 1.29 |
| Mo, % | 53.7 | 42.5 | 48.2 | 45.9 |

Example 12 (Runs 333, 353, 332, 329, 404)

Experiments were done at 385°C (725°F). for 30 minutes using the charge mixture described in Example 11 to determine the importance of the gas composition and pressure. Results are tabulated in Table IV. These results show that a pressure of $H_2S$ or hydrogen is required to make the high surface area metal-carbon composition, and that it is preferably to have both $H_2$ and $H_2S$ pressure.

TABLE IV
Effect of gas composition and pressure

| Run No. | 333 | 353 | 447 | 332 | 329 | 404 |
|---|---|---|---|---|---|---|
| $H_2$ Pressure Charged at Room Temp., (psia) kPa (absolute) | (0) 0 | (2000) 13790 | (0) 0 | (0) 0 | (2000) 13790 | (500) 3447.5 |
| $H_2S$ Pressure Charged at Room Temp., (psia) kPa (absolute) | (0) | (0) | (50) 344.7 | (100) 689.5 | (100) 689.5 | (100) 689.5 |
| Solid Product (filterable) Yield, g. | 0.00 | 3.00 | 4.23 | 4.00 | 3.23 | 3.61 |
| S.A., $m^2/g$ | — | 193 | 315 | 233 | 356 | 356 |
| C, % | — | 16.41 | 31.93 | 29.66 | 14.03 | 22.81 |
| H, % | — | 2.14 | 2.52 | 2.22 | 1.90 | 1.83 |
| Mo, % | — | 51.9 | 36.8 | 38.9 | 48.2 | 43.1 |

# 0 028 667

Example 13

Experiments in gas oil medium only at 6.5 Conradson carbon to metal atomic ratio and at 385°C (725°F.) for 30 min. with 13790 kPa (absolute) (2000 psia) $H_2$ and no $H_2S$ charged at room temperature were performed with a variety of metals and metal combinations. Results are tabulated in Table V.

TABLE V
Metal screening
13790 kPa (abs) (2000 psia) $H_2$ and 0 kPa (abs) (0 psia) $H_2S$ Conradson carbon
derived from gas oil

| Run No. | Metal | | Solid properties | | | |
| | Name | Added As | S.A. $m^2/g$ | C, % | H, % | Metal, % |
|---|---|---|---|---|---|---|
| 371 | Ti | Resinate | 142 | 7.41 | 1.52 | 74.6 |
| 369 | V | Naphthenate | 88 | 6.07 | 1.11 | — |
| 368 | Cr | Naphthenate | 431 | 28.63 | 4.54 | 33.0 |
| 370 | Fe | Naphthenate | No filterable solid | | | — |
| 372 | Co | Naphthenate | 2 | 2.16 | 0.54 | — |
| 316 | Ni | Naphthenate | 4 | 2.90 | 0.46 | 70.8 |
| 402 | Mo | Carbonyl | 117 | 13.08 | 1.29 | 82.4 |
| 396 | Fe/Mo* | Naphthenates | 232 | 9.51 | 1.50 | 54.7 |
| 398 | Co/Mo* | Naphthenates | 283 | 9.75 | 1.46 | 56.6 |
| 397 | Ni/Mo* | Naphthenates | 249 | 8.71 | 1.12 | 55.3 |

* 35/65 atom ratio

Example 14

Experiments were performed under the conditions of Example 13 except that 689.5 kPa (absolute) (100 psia) of $H_2S$ was added at room temperature. Results are tabulated in Table VI.

TABLE VI
Metal screening
13790 kPa (abs.) (2000 psia) $H_2$ and 689.5 kPa (abs.) (100 psia) $H_2S$ Conradson carbon
derived from gas oil

| Run No. | Metal | | Solid Properties | | | |
| | Name | Added As | S.A., $m^2/g$ | C, % | H, % | Metal, % |
|---|---|---|---|---|---|---|
| 376 | Ti | Resinate | 187 | 6.22 | 1.52 | 62.6 |
| 374 | V | Naphthenate | 69 | 5.98 | 1.19 | — |
| 373 | Cr | Naphthenate | 187 | 18.20 | 3.00 | 42.6 |
| 375 | Fe | Naphthenate | 11 | 4.20 | 1.17 | 93.7 |
| 377 | Co | Naphthenate | 49 | 3.33 | 0.68 | 59.4 |
| 378 | Ni | Naphthenate | 11 | 1.18 | 0.10 | 57.3 |
| 386 | Co/Mo* | Naphthenates | 173 | 43.59 | 2.57 | 25.3 |

* 35/65 atom ratio.

12

# 0 028 667

Example 15

Experiments were performed under the conditions of Example 14 except that Cold Lake crude was added to supply 69% of the Conradson carbon in the system, the other 31% being supplied by the gas oil. The Conradson carbon to metal atomic ratio was 6.4. Results are tabulated in Table VII.

TABLE VII

Metal screening

13790 kPa (abs.) (2000 psia) $H_2$ and 689.5 kPa (abs.) (100 psia) $H_2S$ 31% of Conradson carbon derived from gas oil, 69% derived from Cold Lake crude

| Run No. | Metal | | Solid properties | | | |
| | Name | Added As | S.A., $m^2$/g | C, % | H, % | Metal, % |
| --- | --- | --- | --- | --- | --- | --- |
| 383 | Ti | Resinate | 137 | 7.16 | 1.03 | 58.1 |
| 381 | V | Naphthenate | 75 | 3.90 | 0.85 | — |
| 380 | Cr | Naphthenate | No filterable solid | | | — |
| 382 | Fe | Naphthenate | 5 | 3.40 | 0.43 | 84.6 |
| 347 | Co | Naphthenate | 70 | 4.17 | 0.93 | 59.0 |
| 379 | Ni | Naphthenate | 10 | 3.73 | 0.54 | 61.8 |
| 446 | Fe/Mo* | Naphthenates | 274 | 10.92 | 1.22 | 51.8 |
| 387 | Co/Mo* | Naphthenates | 320 | 14.94 | 1.65 | 48.1 |
| 405 | Ni/Mo* | Naphthenates | 200 | 10.92 | 1.25 | 49.2 |

\* 35/65 atom ratio.

Example 16 (Run 340)

A mixture of 33.5 g. of molybdenum naphthenate (6 wt.% molybdenum content) and 66.5 g. of Cold Lake crude oil (13.22 wt.% Conradson carbon) was charged to a 300 $cm^3$ stirred autoclave. This mixture had a Conradson carbon to molybdenum atomic ratio of 35 to 1. The autoclave was flushed with hydrogen and pressured to 689.5 kPa (absolute) (100 psia) with $H_2S$ then to 20340 kPa (absolute) (2950 psia) with $H_2$. The autoclave was heated with stirring at 385°C (725°F). for 30 min. and 448.9°C (840°F.) for 30 min. The average total gauge pressure on reaction conditions was about 20685 kPa (3000 psig). The reactor was cooled, discharged and the contents filtered. The solids were washed with hot toluene followed by hexane to remove adsorbed hydrocarbons, and then vacuum oven dried. The recovered solids weighed 4.69 g. The solids had a surface area of 281 $m^2$/g, a carbon content of 21.51 wt.%, a hydrogen content of 1.29 wt.% and a molybdenum content of 42.9 wt.%.

Example 17

In this example the precursor used to form the high surface area molybdenum catalyst was phosphomolybdic acid (20 $MoO_3 \cdot 2H_3PO_4 \cdot 48H_2O$), supplied by J. T. Baker Chemical Company). The preparation was carried out as follows. To a 300 ml stirred autoclave, there was charged 91.64 g. of Light Arabian vacuum gas oil (0.46% Conradson carbon) and a solution comprised of 0.565 g. of phosphomolybdic acid in 1.695 g. of anhydrous isopropyl alcohol. The ratio of atoms of Conradson carbon to atoms of molybdenum in this mixture is 125/1. The autoclave was flushed with hydrogen and then pressured with 724 kPa (absolute) (105 psia) of $H_2S$ and 13790 kPa (absolute) (2000 psia) of hydrogen at room temperature. The autoclave was heated at 385°C (725°F). for 30 minutes followed by a 30 minute period at 448.9°C (840°F). Upon cooling to room temperature, the autoclave was depressured and the liquid contents were discharged and filtered to isolate the solid product. Adhering oil was removed from the solids by washing sequentially with toluene and hexane. The washed solids were then dried at 80°C. in an oil pump vacuum oven. There was recovered 0.49 g. of dry solids which had a surface area of 123 $m^2$/g and contained 56 weight percent molybdenum.

Example 18

This example illustrates the use of a high surface area molybdenum catalyst and a cobalt impregnated high surface area molybdenum catalyst for the slurry hydrocracking of a Light Arabian vacuum gas oil.

13

(A) Preparation of molybdenum catalyst

The high surface area molybdenum catalyst was prepared as follows. A mixture of 86.5 g. of molybdenum naphthenate (6% molybdenum), 241.6 g. of Light Arabian vacuum gas oil (0.46% Conradson carbon content) and 60.7 g. of Cold Lake crude (12.8% Conradson carbon content) was charged to a one liter stirred autoclave and pressured with 13790 kPa (absolute) (2000 psia) hydrogen at room temperature. The autoclave was heated over a period of 95 minutes to a run temperature of 448.9°C (840°F.) and was held at this temperature for 28 minutes and then cooled rapidly to room temperature. The resultant solids, isolated by filtration, were washed with toluene and then with hexane prior to drying under vacuum. There was recovered 11.17 g. of molybdenum catalyst which exhibited a surface area of 244 $m^2$/g and contained 49 wt.% molybdenum. This catalyst is designated hereinafter as Catalyst A.

(B) Preparation of cobalt impregnated molybdenum catalyst (Run 21-R-40)

A sample of 0.41 g. of catalyst A, high surface area molybdenum catalyst powder, was mixed with 1.17 g. of cobalt naphthenate (6% cobalt) in a 300 ml autoclave at room temperature. The reactor was flushed with hydrogen and then charged, at room temperature, with 1379 kPa (absolute) (200 psia) hydrogen sulfide and 8963.5 kPa (absolute) (1300 psia) hydrogen. Reactor temperature was raised to 350°C (662°F.) over the course of 95 minutes and was held at 350 to 358.9°C (662°F.—678°F.) for 30 minutes followed by rapid cooling to room temperature. The reactor was vented and flushed with nitrogen. Upon opening, it was observed that water and light hydrocarbons, resulting from the decomposition of cobalt naphthenate, had condensed on the upper surfaces of the reactor. These deposits were removed. The cobalt impregnated molybdenum catalyst, which was observed as a black powder on the bottom of the reactor, was not removed, but left in the reactor for a vacuum gas oil hydrocracking test. The atomic ratio of cobalt to molybdenum in the finished catalyst was 0.57. This catalyst is designated hereinafter as catalyst B.

(C) Vacuum gas oil hydrocracking runs

For the hydrocracking runs a 300 ml stirred autoclave was charged with catalyst and approximately 90 g. of a Light Arabian vacuum gas oil. See table for quantities charged. The autoclave was then flushed with hydrogen, charged with 13790 kPa (absolute) (2000 psia) hydrogen at room temperature and heated over the course of 30 minutes to the run temperature of 448.9°C (840°F). After a reaction time of 30 minutes at 448.9°C (840°F.) the reactor was cooled rapidly to room temperature and the contents were analyzed.

Hydrocracking results obtained with the high surface area catalysts are shown in Table VIII relative to the results obtained in a non-catalytic thermal hydrocracking run. As is apparent from the data, the high surface area catalysts gave hydrocracking results much superior to those obtained in the purely thermal conversion run. In particular, product desulfurization was much higher, product unsaturation was much lower (lower bromine numbers) and the 343.3°C$^-$(650°F.$^-$) conversion product distillate to naphtha ratios were, desirably, higher.

TABLE VIII
Vacuum gas oil hydrocracking runs

| Run No. | 21-R-25 | 08-R-57 | 21-R-40 |
|---|---|---|---|
| Gas Oil Charged, g. | 94.95 | 92.20 | 92.43 |
| Catalyst | A | None | B |
| Charge, g. | 0.41 | | 0.41 g of Catalyst A+Cobalt |
| Conversion of 343.3°C$^+$ (650°F.$^+$) to 343.3°C$^-$ (650°F.$^-$) Products, % | 44.8 | 59.7 | 54.3 |
| Sulfur Removed From Gas Oil, % | 61.0 | 5.4 | 86.0 |
| Bromine Number of Total Liquid Product | 3.9 | 16.6 | 1.6 |
| Weight Ratio of Distillate (179.4—343.3°C) (355—650°F.) to Naphtha (i-179.4°C) (i-355°F.) | 3.3 | 3.12 | 3.6 |
| $H_2$ Consumption, (SCF/B) l/l of Feed | (501) 89.23 | (553) 98.5 | (651) 115.95 |

Example 19

This example shows the preparation of a cobalt promoted molybdenum catalyst (coprecipitated

# 0 028 667

catalyst) from a blend of oil soluble cobalt and molybdenum compounds according to the practice of this invention. The procedure used was similar to that of Example 2. The ratio of atoms of Conradson carbon to the sum of the atoms of molybdenum and cobalt in this preparation was 6.5/1. From a reactor charge consisting of 102.8 g. of Light Arabian vacuum gas oil, 8.22 g of Cold Lake crude, 6.92 g. of cobalt naphthenate (6% cobalt by weight) and 20.74 g of molybdenum naphthenate (6% Mo by weight) there was recovered 3.11 g. of dry cobalt-molybdenum catalyst which exhibited a surface area of 253 $m^2/g$. This catalyst is designated hereinafter as catalyst C.

The catalysts' desulfurization activity was determined using the following procedure. To a 300 ml autoclave there was added the calcined presulfided catalyst powder, typically about 0.6 g., and 92 g. of light Arabian vacuum gas oil which contained 2.42 wt.% sulfur. The reactor was flushed with hydrogen and then charged at room temperature with 275.8 kPa (absolute) (40 psia) hydrogen sulfide and 13790 kPa (absolute) (2000 psia) hydrogen. The reactor was heated as rapidly as possible (~25 minutes) to a temperature of 385°C (725°F), held there with stirring for 30 minutes and then the temperature was increased to 426.7°C (800°F) for a final 25 minute contact prior to cooling to room temperature. Reactor products were discharged and analyzed for sulfur content. As shown in Table IX the coprecipitated cobalt molybdenum catalyst (Run 60-R-15) had desulfurization activity superior to that of the non-promoted molybdenum catalyst of this invention (Run 21-R-57).

TABLE IX
Coprecipitated cobalt-molybdenum catalyst

| Run No. | 60-R-15 | 21-R-57 |
|---|---|---|
| Cobalt Incorporated by: | Coprecipitation C | No cobalt |
| Co/Mo Atomic Ratio | — | No cobalt |
| Relative Desulf. Act. | 2.32 | 1 |

Example 20

A sample of high surface area molybdenum-containing solid powder was prepared according to this invention and had the following properties; surface area 330 $m^2/g$; C, 12.53 wt.%; H, 1.41 wt.%; Mo, 47.8 wt.%.

This powder was impregnated with cobalt as follows. To a charge of 6.06 grams of vacuum oven dried molybdenum catalyst powder contained in a 12.7 cm (5″) diameter evaporating dish there was added dropwise, with stirring, 24.11 grams of a solution comprised of 7.4 wt.% cobaltous acetate tetrahydrate, 7.0 wt.% isopropyl alcohol and 85.6 wt.% deionized water. The amount of impregnation solution added was just sufficient to impart a glistening wet appearance to the powder. After a 15 minute drying period in a vacuum oven at 80°C., the solids were treated with the impregnation diluent (8 wt.% isopropyl alcohol+92 wt.% water) to again reach the glistening wet surface appearance and then were dried a final time for 90 minutes at 80°C. in a vacuum oven. There was recovered 7.02 g. of cobaltous acetate impregnated molybdenum catalyst powder.

This cobalt impregnated powder was then pilled using bentonite as the binder in the proportion of 74 wt.% to 26 wt.% bentonite. The pills were cracked and screened to 12—48 mesh (Tyler). The surface area of the finished catalyst was 180 $m^2/g$. This catalyst is designated hereinafter as catalyst D.

Catalyst D was tested for desulfurization of vacuum gas oil in a continuous unit at 362.8°C (685°F.), 1 V/V/Hr., 10342.5 kPa (gauge) (1500 psig) $H_2$ pressure in direct comparison with a commonly used standard commercially available desulfurization catalyst (12—48 mesh). The catalyst of this invention was found to have an activity, on a catalyst volume equivalent basis, 68% greater than the given commercially available desulfurization catalyst, which itself is a high activity desulfurization catalyst.

Example 21

A catalyst of the present invention, prepared with molybdenum naphthenate precursor, containing 47.6 weight percent molybdenum and having a surface area of 330 $m^2/g$ was blended with bentonite as a binder in a 71/29 weight ratio. The blend was pilled, cracked and screened to 12—48 mesh (Tyler) screen size. The resulting finished catalyst, hereinafter designated catalyst E, was tested for desulfurization of light Arab vacuum gas oil containing 2.34 weight percent sulfur at 10342.5 kPa (gauge) (1500 psig) and 0.97 volumes of liquid feed per volume of catalyst per hour in a continuous unit. The results are summarized in Table X.

15

# 0 028 667

## TABLE X

| Catalyst Age, Hr. and Oil | 209 | 425 |
|---|---|---|
| Temperature, °C(°F.) | 349.4 (661) | 362.2 (684) |
| H₂ Fed, (SCF/Bbl.) l/l | (1683) 299.8 | (2061) 367.1 |
| Desulfurization, % | 69.9 | 83.7 |

In this specification, the mesh size referred to is of the Tyler mesh series.

The following approximate conversions of units apply:

Lengths given in inches (") are converted to centimeters by multiplying by 2.54.

Temperatures given in °F are converted to °C by subtracting 32 and then dividing by 1.8.

Pressures given in pounds per square inch (psi) are converted to $kg/cm^2$ by multiplying by 0.070307.

Volumes given in Standard Cubic Feet (SCF) are converted to litres by multiplying by 28.32.

Volumes given in barrels (bbl) are converted to litres by multiplying by 159.0.

**Claims**

1. A method of preparing high surface area catalyst by adding at least one thermally decomposable metal compound to a hydrocarbon oil chargestock having a Conradson carbon content of up to 50 weight percent, the metal constituent of the said metal compound being selected from the metals of Group II, Group III, Group IV, Group V, Group VIB, Group VIIB and Group VIII of the Periodic Table of Elements and mixtures of such metals, and heating said thermally decomposable metal compound within said chargestock at an elevated temperature in the presence of a gas, characterised in that the amount of said metal compound is such as to provide a ratio of atoms of Conradson carbon atoms of the chargestock to atoms of the metal constituent of the said metal compound of not more than 600 to 1 and in that the said gas is selected from a gas comprising hydrogen and/or hydrogen sulfide.

2. The method of claim 1 characterised in that said thermally decomposable metal compound is selected from inorganic metal compounds, salts of organic acids, organometallic compounds and salts of organic amines.

3. The method of claim 1 or claim 2 characterised in that said thermally decomposable metal compound is selected from salts of acyclic aliphatic carboxylic acids and salts of alicyclic aliphatic carboxylic acids.

4. The method of any one of claims 1 to 3 characterised in that said thermally decomposable metal compound is a salt of a naphthenic acid.

5. The method of any one of claims 1 to 4 characterised in that the metal constituent of said thermally decomposable metal compound is selected from molybdenum, tungsten, chromium, vanadium, cobalt, titanium, iron, nickel and mixtures thereof.

6. The method of any one of claims 1 to 5 characterised in that the high surface area catalyst is recovered and composited with at least one additional catalyst component.

7. The method of any one of claims 1 to 6 characterised in that the amount of thermally decomposable metal compound(s) added to the chargestock is/are such as to provide at least 10 wt.% of the metal component(s) thereof (calculated as elemental metal) based on the total weight of catalyst.

8. The method of any one of claims 1 to 7 characterised in that the ratio of Conradson carbon atoms of the chargestock to atoms of the said metal constituent is less than 100 to 1.

9. A catalytic hydrocarbon treating process comprising contacting a hydrocarbonaceous oil feed at treating conditions with a catalyst, characterised in that the catalyst is the high surface area catalyst made by the method of any one of claims 1 to 8.

10. The process of claim 9 characterised in that said process is selected from: (i) a hydroprocess, such as a hydrocracking process, a hydrodesulfurization process or a reforming process, and wherein said oil and said catalyst are contacted in the presence of added hydrogen; and (ii) a catalytic cracking process conducted in the absence of added hydrogen, and the said hydrocarbonaceous oil feed of said hydrocarbon treating process is selected from petroleum derived oils, tar sand oil, shale oil, liquid products derived from coal liquefaction processes, coal liquefaction bottoms, and mixtures thereof.

**Patentansprüche**

1. Verfahren zur Herstellung eines Katalysators mit großer Oberfläche, bei dem einem Kohlenwasserstofföl ausgangsmaterial mit einem Conradson-Kohlenstoffgehalt von bis zu 50 Gew.% mindestens eine thermisch zersetzbare Metallverbindung zugesetzt wird, wobei der Metallbestandteil der Metallverbindung ausgewählt ist aus den Metallen der Gruppe II, Gruppe III, Gruppe IV, Gruppe V, Gruppe VIB, Gruppe VIIB und Gruppe VIII des Periodischen Systems der Elemente und Mischungen dieser Metalle, und die thermisch zersetzbare Metallverbindung in dem Ausgangsmaterial in Gegenwart eines Gases auf eine

16

erhöhte Temperatur erhitzt wird, dadurch gekennzeichnet, daß die Menge der Metallverbindung so groß ist, daß ein Verhältnis von Conradson-Kohlenstoffatomen im Ausgangsmaterial zu Atomen des Metallbestandteils in der Metallverbindung von nicht mehr als 600:1 vorliegt, und daß das Gas ausgewählt ist aus einem Gas, das Wasserstoff und/oder Schwefelwasserstoff umfaßt.

2. Verfahren nach Anspruch 1, dadurch gekennzeichnet, daß die thermisch zersetzbare Metallverbindung ausgewählt ist aus anorganischen Metallverbindungen, Salzen organischer Säuren, organometallischen Verbindungen und Salzen organischer Amine.

3. Verfahren nach Anspruch 1 oder 2, dadurch gekennzeichnet, daß die thermisch zersetzbare Metallverbindung ausgewählt ist aus Salzen von acyclischen aliphatischen Carbonsäuren und Salzen von alicyclischen aliphatischen Carbonsäuren.

4. Verfahren nach einem der Ansprüche 1 bis 3, dadurch gekennzeichnet, daß die thermisch zersetzbare Metallverbindung ein Salz einer Naphthensäure ist.

5. Verfahren nach einem der Ansprüche 1 bis 4, dadurch gekennzeichnet, daß der Metallbestandteil der thermisch zersetzbaren Metallverbindung ausgewählt ist aus Molybdän, Wolfram, Chrom, Vanadin, Kobalt, Titan, Eisen, Nickel und Mischungen derselben.

6. Verfahren nach einem der Ansprüche 1 bis 5, dadurch gekennzeichnet, daß der Katalysator mit großer Oberfläche gewonnen und mit mindestens einer zusätzlichen Katalysatorkomponente vermischt wird.

7. Verfahren nach einem der Ansprüche 1 bis 6, dadurch gekennzeichnet, daß die Menge der thermisch zersetzbaren Metallverbindung(en), die dem Ausgangsmaterial zugesetzt wird, so groß ist, daß sie, bezogen auf das Gesamtgewicht des Katalysators, mindestens 10 Gew.% der Metallkomponente(n) davon (berechnet als elementares Metall) liefert.

8. Verfahren nach einem der Ansprüche 1 bis 7, dadurch gekennzeichnet, daß das Verhältnis von Conradson-Kohlenstoffatomen des Ausgangsmaterials zu Atomen des Metallbestandteils weniger als 100:1 beträgt.

9. Katalytisches Kohlenwasserstoffbehandlungsverfahren, bei dem ein kohlenwasserstoffhaltiges Öleinsatzmaterial bei Behandlungsbedingungen mit einem Katalysator kontaktiert wird, dadurch gekennzeichnet, daß der Katalysator der Katalysator mit großer Oberfläche ist, der nach den Verfahren gemäß einem der Ansprüche 1 bis 8 hergestellt worden ist.

10. Verfahren nach Anspruch 9, dadurch gekennzeichnet, daß das Verfahren ausgewählt ist aus: (i) einem Hydroverfahren wie einem Hydrocrackverfahren, einem Hydrodesulfurierungsverfahren oder einem Reformierverfahren, bei welchem das Öl und der Katalysator in Gegenwart von zugesetztem Wasserstoff kontaktiert werden; und (ii) einem katalytischen Crackverfahren, das in Abwesenheit von zugesetztem Wasserstoff durchgeführt wird, und das kohlenwasserstoffhaltige Öleinsatzmaterial des Kohlenwasserstoffbehandlungsverfahrens ausgewählt ist aus aus Erdöl erhaltenen Ölen, Teersandöl, Schieferöl, flüssigen, aus Kohleverflüssigungsverfahren gewonnenen Produkten, Bodenprodukten aus der Kohleverflüssigung und Mischungen derselben.

## Revendications

1. Un procédé de préparation d'un catalyseur à grande surface spécifique par addition d'au moins un composé métallique thermiquement décomposable à une charge d'huile hydrocarbonée ayant une teneur en carbone Conradson jusqu'à 50 pourcent en poids, le constituant métallique dudit composé métallique étant choisi parmi des métaux du groupe II, du groupe III, du groupe IV, du groupe V, du groupe VIB, du groupe VIIB et du groupe VIII de la classification périodique des éléments et des mélanges de ces métaux, et par chauffage dudit composé métallique thermiquement décomposable au sein de la charge à une température élevée en présence d'un gaz, caractérisé en ce que la quantite dudit composé métallique est telle qu'elle fournit un rapport d'atomes de carbone Conradson de la charge aux atomes du constituant métallique dudit composé métallique non supérieur à 600:1 et que ledit gaz est choisi parmi un gaz contenant de l'hydrogène et/ou de l'hydrogène sulfuré.

2. Procédé selon la revendication 1, caractérisé en ce que ledit composé métallique décomposable thermiquement est choisi parmi des composés métalliques minéraux, des sels d'acides organiques, des composés organo-métalliques et des sels d'amines organiques.

3. Procédé selon la revendication 1 ou 2, caractérisé en ce que ledit composé métallique décomposable thermiquement est choisi parmi les sels d'acides carboxyliques aliphatiques acycliques et les sels d'acides carboxyliques aliphatiques alicycliques.

4. Procédé selon l'une quelconque des revendications 1 à 3, caractérisé en ce que ledit composé métallique décomposable thermiquemente est un sel d'un acide naphténique.

5. Procédé selon l'une quelconque des revendications 1 à 4, caractérisé en ce que le constituant métallique dudit composé métallique décomposable thermiquement est choisi parmi le molybdène, le tungstène, le chrome, le vanadium, le cobalt, le titane, le fer, le nickel et leurs mélanges.

6. Procédé selon l'une quelconque des revendications 1 à 5, caractérisé en ce que le catalyseur à grande surface spécifique est récupéré et enrobé d'au moins un composant de catalyseur additionnel.

7. Procédé selon l'une quelconque des revendications 1 à 6, caractérisé en ce que la quantité du ou des composés métalliques thermiquement décomposables ajoutée à la charge est telle qu'elle fournit au moins 10% en poids du ou des constituants métalliques de ceux-ci (calculés en métal élémentaire) par rapport au poids total du catalyseur.

8. Procédé selon l'une quelconque des revendications 1 à 7, caractérisé en ce que le rapport des atomes de carbone Conradson de la charge aux atomes dudit constituant métallique est inférieur à 100 à 1.

9. Un procédé de traitement catalytique d'hydrocarbures consistant à mettre en contact une charge d'huile hydrocarbonée, dans des conditions de traitement, avec un catalyseur, caractérisé en ce que le catalyseur est le catalyseur à grande surface spécifique préparé par le procédé de l'une quelconque des revendications 1 à 8.

10. Procédé selon la revendication 9, caractérisé en ce que ledit procédé est choisi parmi: I) un procédé d'hydroconversion, tel qu'un procédé d'hydrocraquage, un procédé d'hydrodésulfuration ou un procédé de reformage et dans lequel ladite huile et ledit catalyseur sont mis en contact en présence d'hydrogène ajouté et II) un procédé de craquage catalytique conduit en l'absence d'hydrogène ajouté, et que ladite charge d'huile hydrocarbonée dudit procédé de traitement des hydrocarbures est choisi parmi les huiles de pétrole, l'huile de sable asphaltique, l'huile de schiste bitumineux, les produits liquides provenant des procédés de liquéfaction du charbon, les résidus de la liquéfaction du charbon et leurs mélanges.

FIG. I

H₂ + LIGHT GASES — 20

GAS-LIQUID SEPARATOR 18

16

REACTOR 12

OIL + CATALYST PRECURSOR — 10

H₂ + H₂S — 14

22

FIG. 2

EFFECT OF CON. CARBON TO METAL RATIO
ON FORMATION OF HIGH SURFACE AREA MOLYDENUM−CARBON COMPOSITION

S.A., $M^2$/G

- ◆ EXAMPLE 2, $H_2S$ ADDED
- ■ EXAMPLE 3, $H_2S$ ADDED
- ▲ EXAMPLE 4, NO $H_2S$ ADDED

ATOM CON. CARBON/ATOM Mo

0 028 667

FIG. 3

EFFECT OF VARIABLES ON FORMATION
OF HIGH SURFACE TUNGSTEN-CARBON COMPOSITION